# EUROPEAN PATENT APPLICATION

(11) **EP 3 907 674 A1**
(43) Date of publication of application: **10.11.2021**
(21) Application number: 21172682.3
(22) Date of filing: 07.05.2021
(51) Int. Cl.: G06Q 10/02, G06Q 10/06, G06Q 50/26, G06Q 10/08

(54) **COMPUTERIZED GLOBAL MARINE DISTRIBUTION SYSTEM (MDS)**

(30) Priority: 07.05.2020 US 202063021111 P
(71) Applicant: Pick a Pier LTD, Tel Aviv (IL)
(72) Inventor: COHEN, Asaf, Moshav Beit Halevi (IL); COHEN, Idan, Tel Aviv (IL); ANTWARG, Liat, Gani Tikva (IL); ZELLNER, Ari, Ramat Gan (IL)
(74) Representative: Betten & Resch

(57) **Abstract**

The invention provides a computerized method and system of ordering, tracking, and processing marine travel, especially useful for tracking entry or exit from ports. The invention provides a global marine distribution system (MDS), allowing users to submit documents to government authorities and to port authorities, and to track the document processing status. The invention aggregates marine travel data related to participating vessels, analyzes the data and outputs marine travel reports related to predefined geographical locations and time periods.

## Description

### FIELD OF THE INVENTION

The invention relates to a central computerized system for tracking and storing maritime travel data related to marine vessels, especially as they relate to travel associated with docking at ports. The system aggregates travel data, which may be outputted as reports; and provides analysis of travel trends. Non-limiting examples of data tracked, include: sailing specifics, check-ins and check-outs (including reservations and real-time behaviour).

The system allows pre-filing of official documentation for inspection by local authorities prior to arrival at port, and tracking processing of the documentation.

### BACKGROUND

In the marine industry, there is no central automated system for ordering maritime services for a vessel, or for submission of official documents to local authorities prior to arrival.

An arriving vessel must provide authorities with its manifest, which includes details on travellers and cargo, and must provide vessel and passport documentation. It would be desirable if these documents could be filed well in advance of arrival, to allow authorities to predetermine whether specific cargo or passengers will be denied entry into port, and therefore should not be sent on an outgoing vessel.

Presently, there is no unified global system for tracking vessels, or for ordering maritime services, that is also connected to and regulated by local authorities at the destination country of the port supplying these services. Non-limiting examples of maritime services are berth booking, vessel repair, vessel cleaning, hiring of crew, submission of documents, and ordering and submission of insurance policies.

Prior art methods for ordering a docking berth or other services at port, and for tracking availability of berths at a port, are inflexible, outdated technologically, and vary at each port. Some ports still rely on paper pier maps, pockmarked with thumbtacks indicating the presence of vessels in port. This results in lack of managing oversight and lends itself to human error, which may be financially disastrous to the port.

Bookings and ordering of marine services at port, are typically conducted over the phone, or at best over email, and are manually assessed and approved by a port manager, based on limited knowledge of future availability. The lack of connectivity and computerized oversight results in lost marketing opportunities and slow customer growth. Ordering of marine services at port, varies greatly between ports.

Boaters and ports must comply with local and national regulation. Ports lack tools to verify the information of arriving vessels and must rely on questionable information provided by docking vessels.

The need exists for a central global marine digital solution that supports the complexity of the marine market and can aggregate data. The system should be able to save and sort travel data, to produce reports as necessary for port authorities or tourism ministries. This would allow identification of travel trends and best management of the marine travel industry.

In contrast, the airline industry utilizes computerized networks termed Global Distribution Systems (GDS), which allow airlines, hotels, car rental companies, and travel agencies to interact with one another and provide their services, and provide travel agents with real-time inventory (e.g. number of hotel rooms available, number of flight seats available, or number of cars available). Primary customers of GDS are travel agents who use various reservation systems. GDS holds no inventory, rather the GDS has a real-time link to the vendor's database; the inventory is held on the vendor's reservation system. For example, when a travel agency wants a ticket from a particular airline, the GDS system routes the request to the appropriate airline's reservations system. The most well-known GDS systems are Amadeus®, Sabre®, and Travelport®.

Marine skippers must provide numerous documents before being allowed to berth, so that tracking the processing status of these documents has previously been tedious and time consuming.

The various GDS systems known in the airline industry do not provide sufficient capabilities necessary for the marine industry. For instance, the airline industry GDS's cannot be used to submit cargo documentation, arriving vessel identification documents or travel documentation to the local authorities for their inspection. Additionally, most vessels are owned by one or more individuals and must be tracked individually, contrary to airline owned aircrafts.

The marine shipping and travel industries require approval by local authorities of countless documents, so as to meet health requirements, to clear customs and passport authorities, and prevent entry of undesirable individuals or cargo. The GDS does not allow submission of official documentation or track receipt of government approval of these documents prior to travel.

It is an object of the present invention to provide an automated global marine distribution system (MDS) for tracking marine travel and aggregating marine travel data, especially as it relates to travel into and out of ports. The invention upgrades marine service management to modern capabilities known in other parallel industries, and provides new capabilities not known in parallel industries and not previously known in the art. The MDS may be utilized for all types of marine traffic, including both commercial vessels and pleasure vessels.

These and other objects will be apparent in the detailed description hereinbelow.

### SUMMARY

### GLOSSARY

In the present invention, the following terminology is used:
The term "electronically identifying a user" refers to verification of pre-registered user identity. A non-limiting example of identification means to electronically identify a user, is a dedicated identity verification API, which utilizes two-factor authentication protocols.
The term "an electronic request for a marine docking berth reservation" refers to a request to berth a specific marine vessel at a specific port, during defined calendar dates. The request is submitted by a user, using the software of the invention.
The term "reservation specifics" pertains to at least the following details: a vessel name, a vessel size, calendar dates of interest, and a port of interest or a geographical area of interest.
The term "berth booking request" refers to confirmation sent by a user of his desire to book a docking berth. The user initially sent a "reservation request" as a first step, to inquire about availability of suitable berths, and must provide a "berth booking request" as a second step, which indicates "please book".
The term "status of processing" in relation to "documents required for docking" or to "berth booking request", refers to an update on the condition of handling of the documents or of the booking. Non-limiting examples of status are: approved, booked, pending, on hold, rejected, received, more documents required, clarification required.
The term "providing authorities access" in relation to documents and to berth booking request, refers to allowing access to identified users from local or national authorities, as necessary for approving a marine berthing request at a specific port. Access may be provided by allowing such authorities to verify their identity and logon directly to the system. Alternatively, specific documents and vessel history, may be defined to be automatically forwarded to authorities; or may be automatically deposited by the MDS system of the invention, into databases held by government or local authorities, for review by authorities. Authorities may then update the processing status accordingly (by direct logon or by other electronic communication).
The term "marine travel data" comprises specifics related to marine travel, for an individual or for a vessel. Non-limiting examples are: travel dates, travel routes, vessel ownership and vessel data, skipper data, documentation related to marine travel, miles sailed, utilities used at port. the port of origin; the destination port; an absence report from a port of origin, and passenger data.

There is provided, a computerized method of ordering, tracking, and processing orders of marine docking berths at ports, the method comprising:
electronically identifying a user;
receiving as input, an electronic request for a marine docking berth reservation at a port of interest, the reservation request including reservation specifics;
providing a user access to availability data of marine docking berths at the port of interest;
outputting to a user a list of documents required for docking at the port of interest;
receiving from the user, documents required for docking, the documents received in electronic format; and receiving from the user a berth booking request;
saving in memory, the documents required for docking; wherein the documents are associated with the identified user and with the berth booking request;
providing access to the documents, and to the booking request, to authorities associated with the port of interest;
receiving a processing status of the documents from the authorities;
receiving from the authorities, a status of processing of the berth booking request;
allowing a user to view the processing status of the documents, and of the berth booking request.

Further, the reservation specifics pertaining to a reservation request, may comprise: a vessel name, a vessel size, calendar dates of interest, and a port of interest.

Optionally, the authorities associated with the port of interest, comprise at least one of the following: port authorities, custom authorities, passport control authorities, tourism authorities, health ministry authorities, and police.

Moreover, the user may be selected from: a boater, a skipper, a travel agent, a commercial marine user, a marine cargo shipper, and a marine charter service agent.

Additionally, the method may further comprise providing a user with access to a vendor offering a service at a port of interest, the vendor selected from: vessel maintenance service, a car rental service, a cargo delivery service, and an insurance agent.

The method may also include the step of sending a port authority, a query to rank their satisfaction level pertaining to a vessel and skipper, at the conclusion of the user's docking reservation; and saving the ranking in memory in association with the user identification. Optionally, the method comprises the step of automatically generating a health risk score associated with a reservation request, the score based on health rules created by health authorities at a geographical destination area interest; and providing the health risk score to authorities associated with the port of interest. In one embodiment, the health risk score is generated by collecting data on at least one of the following: the vessel port of origin, vessel recent countries visited, traveller recent countries visited, and cargo port of origin. Moreover, the documents required for docking, and received from a user, may be saved in memory, as associated with a user identity, and may be automatically retrieved repeatedly.

In one embodiment, the status of processing, of the berth booking request, or of the docking documents, is selected from: approved, booked, pending, on hold, rejected, received, more documents required, and clarification required.

Optionally, the step of providing access to the documents, to authorities associated with the port of interest, comprises one of the following: automatically forwarding the documents to authorities; or automatically depositing the documents into databases managed by the authorities.

In one embodiment, the documents required for docking are selected from at least one of the following: a home marina departure document, vessel insurance, vessel license, owner license, skipper license, skipper insurance, credit card, crew list, passenger list, crew health declarations, passenger health declarations, manifest, and a cargo list.

Further, the method may further comprise allowing an identified user to send an absence report from a specific berth, and allowing authorities associated with the berth location to access the absence report.

Additionally, the method may further comprise the step of providing authorities associated with the port of interest, with permission to enter automatic rejection rules for a berth booking request and for the documents.

The method may include the step of saving details, related to a rejected berth booking request or a rejected document, in memory, associated with the user identity, and allowing retrieval of the details upon receipt of a new request for a marine docking berth reservation. Additionally, the method may include the step of receiving a request from an identified user to track distance sailed (number of miles sailed), obtaining data on number of miles sailed and saving the data associated with the user.

The invention additionally provides a computerized system for ordering, tracking, and processing orders of marine docking berths at ports; the system comprising: an input interface for receiving input from a user;
a processing unit operatively connected to the input interface;
a storage unit operatively connected to the processing unit to store the input; the storage unit also containing instructions that when executed by the processing unit cause the processing unit to:
   identify a user;
   receive as input, a request for a marine docking berth reservation at a port of interest,
   the reservation including reservation specifics;
   provide a user access to availability data of marine docking berths at the port of interest;
   provide a user with a list of documents required for docking at the port of interest;
   receive from the user documents required for docking; and receive from the user a berth booking request;
   save in memory, the documents required for docking; wherein the documents are associated with the identified user and with the berth booking request;
   provide access to the documents, to authorities associated with the port of interest;
   receive a processing status of the documents from the authorities;
   receive from the authorities, a status of processing of the berth booking request;
   allow a user to view the processing status of the documents, and of the berth booking
   request.

The invention further provides a computerized system for tracking travel data related to marine travel of participating vessels; the system comprising: an input interface for receiving input from a user;
a processing unit operatively connected to the input interface;
a storage unit operatively connected to the processing unit to store the input; the storage unit also containing instructions that when executed by the processing unit cause the processing unit to:
   identify a user associated with a specific marine vessel;
   receive as input, a request to update marine travel data for the user or for the marine vessel;
   save in memory, the updated travel data, associated with the identified user and with the marine vessel;
   provide access to the marine travel data, to authorities associated with an area of travel of the vessel;
   allow a user to view the travel data.

Optionally, the marine travel data comprises at least one of the following: the number of miles sailed; the port of origin; the destination port; calendar dates of travel; the travel route; an absence report from a port of origin, skipper data, passenger data, and vessel data. Moreover, the skipper data may comprise skipper license data.

In one embodiment, the number of miles sailed is obtained by tracking a signal from an automatic identification system transceiver located onboard a vessel.

Further, optionally the updated travel data is saved in a database as associated with the vessel and with the user, retrievable as a historical record of travel of the vessel or the user; the historical record comprising calendar dates of travel, and travel route.

Still further, the authorities may comprise at least one of the following: port authorities, tourism authorities, custom authorities, passport control authorities, health ministry authorities, and police.

In one embodiment, the updated travel data is aggregated and outputted as a report selected from at least one of the following: vessels at port during predefined dates; vessels located at a defined geographical location during predefined calendar dates; water consumption at port for a vessel; electricity consumption at port for a vessel; waste pickup at port for a vessel; electricity consumption at a port during predefined calendar dates; travel route during predetermined dates for a vessel; water consumption at port during predefined calendar dates; waste pickup at port during predefined calendar dates; and travel trends at a predefined geographical location, during a predefined period.

### BRIEF DESCRIPTION OF THE DRAWINGS

The present invention is illustrated by way of example in the figures of the accompanying drawings, in which like references indicate similar elements and in which:
Fig. 1 illustrates a high-level flowchart is shown indicating flow of information from users of the system and method of the invention.
Fig. 2 illustrates a central screen for a specific boating user.
Fig. 3 shows a screenshot indicating all documents filed, and their processing status, as related to a specific voyage of the vessel Blue Star.
Fig. 4 illustrates screenshots for a boater receiving approval of his berth docking reservation.
Fig. 5 illustrates a flowchart showing flow of information and documentation between a boater and authorities.
Fig. 6 illustrates some advantages of the MDS system.
Fig. 7 illustrates incentive options that may be offered to boaters and ports to encourage use of the MDS system.
Fig. 8 illustrates an assessment of vessel parameters or Pandemic assessment, outputted by the MDS of the invention.
Fig. 9 illustrates the capability to track the number of miles sailed by a specific boater.
Fig. 10 illustrates a report of travel data, that has been aggregated from participating vessels travelling in the vicinity of France and the UK.
Fig. 11 illustrates numerous service capabilities of the invention, available to boaters, government authorities, marinas, agents and service providers.
Fig. 12 illustrates parties active in travel service, that may benefit from analysis of travel trends and reports, outputted by the MDS.

### DETAILED DESCRIPTION OF THE INVENTION

In the following detailed description, numerous specific details are set forth in order to provide a thorough understanding of the present invention. There is no intention to limit the invention to the details of construction and the arrangement of the components set forth in the following description or illustrated in the drawings. The invention is capable of other embodiments or of being practiced or carried out in various ways. Also, it is to be understood that the phraseology and terminology employed herein are for the purpose of description and should not be regarded as limiting.

In a general overview of the invention, there is provided an automated computerized central global Marine Distribution System (MDS) and method, for tracking, processing, and booking marine services, and marine travel. The invention allows users to access an electronic system showing real-time status of berth inventory at a plurality of ports. Users may book and track the processing status of their reservations, and service providers may offer services related to marine travel. The system allows electronic submission of official travel documentation necessary for entry of travellers or goods to specific countries. The system allows local officials such as customs and passport control, to review this documentation, and to input their document approval or rejections. Documentation processing status is then updated for the user. The system generates and provides port officials, with reviews and satisfaction ranking for a specific vessel and skipper, that have requested a reservation; this may aid port officials with their decision whether to approve a requested reservation.

The system additionally saves and aggregates marine travel data, and outputs analysis and reports, relevant to port authorities and tourism authorities. Such reports may allow best management of resources at a destination location. In a presently preferred embodiment, the travel data is automatically obtained from reservations booked by users.

A single system for intercommunication between all parties related to marine travel has not been previously developed to date. The system of the invention allows rapid status tracking and ease of processing of the numerous documents pertaining to marine travel and marine shipping.

Numerous documents must be filed and approved before a skipper is allowed to berth, so that tracking the processing status of these documents has previously been tedious and time consuming. This is in contrast with parallel industries, such as the airline industry, where a traveller may merely book a ticket online and typically may arrive at a destination without much encountering significant bureaucracy or advance planning. The present invention alleviates a considerable need in the field of marine travel and allows younger boaters to utilize electronic communication to easily generate a marine reservation and track its processing.

The MDS may be utilized for all types of marine traffic berth reservations, including both commercial vessels and pleasure vessels.

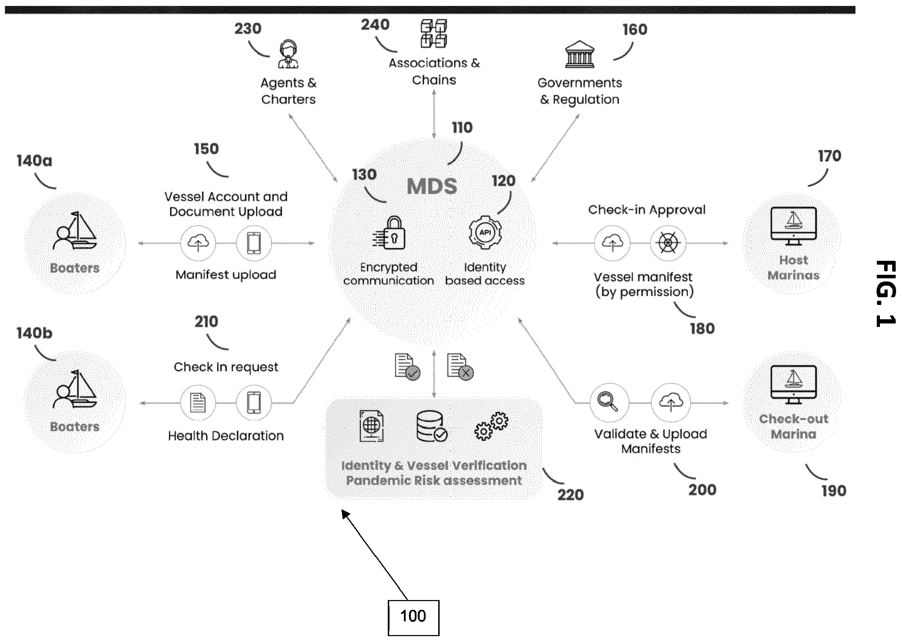

Referring now to Fig. 1, a high-level flowchart is shown indicating flow of information from users of the system and method of the invention. The global Marine Distribution System (MDS) 100 allows users to communicate with a central MDS server 110 running the software of the invention, to create and track processing of marine berth reservations at various ports worldwide. Access to the MDS server 110 is granted, preferably after verification of preregistered user identity, via a dedicated identity verification API 120, which may utilize two-factor authentication protocols. Communication over the web utilizes secure protocols 130 such as SSL/TLS. Users may communicate electronically with the MDS server, using a dedicated mobile application, a widget, or a general web browser.

Referring to Fig. 1, left side, a boater 140a may be identified and log onto the MDS server 110, and after sending a reservation request at a preferred port destination, boater 140 may upload 150 official documents required for arrival at the destination port. Non-limiting examples of documents include vessel license, vessel insurance, skipper license, manifest, passenger list, etc., and are enlarged upon hereinbelow.

Government officials 160 communicate with the MDS server 110 to inspect the documents provided and ascertain whether they meet local regulations and whether the arrival may be approved or denied, or whether additional documents or clarification is required.

Government authorities that require access to the system include port authorities, and custom and passport control authorities. In order to determine whether cargo meets current health regulations, ministry of health officials may be granted access, or they may provide periodic bulletins to customs officials. Similarly, border control authorities may receive updates from police on persona non-grata status, or certain police officials may be granted limited access to the system.

Host ports or marina administrators 170 access the MDS server 110 to view requested berth reservations, review manifests, and provide their check-in approval 180 of berth reservations.

An additional feature of the MDS system, useful for port officials, is generation of reviews and satisfaction rankings for each specific vessel and skipper based on past behaviour at port. This may be used to determine whether to approve incoming reservations for returning skippers and vessels. This is enlarged upon hereinbelow.

When vessels depart, host marinas process vessel check-out 190, by validating manifests 200 and documents uploaded.

Once a reservation is confirmed, boaters 140b may send a check-in request 210, in which they upload any health declarations or other documents needed for arrival at a port of interest.

In times of crises, such as during the Covid-19 pandemic, relevant health authorities may review the documentation provided, and return a pandemic risk assessment 220 for a specific arriving vessel at a port. Port authorities may use the assessment to determine whether to approve a reservation.

The level of access can be set according to the user identity, so that government officials may access and review relevant official documents uploaded, while third parties such as other boaters or travel agents may not access such confidential documents.

Referring to Fig. 1, upper portion, travel agents and yacht charter services 230 may access the MDS server 110 to review berths available at destination ports of interest. The berth inventory available, may be provided by individual host ports or marinas 170, or by marina associations and chains 240, such as Trans-Europe®, etc.

Users requesting to view berth availability and book reservations may be redirected to the reservation booking system used by a specific port of interest; the MDS server 110 may provide a real-time link to the port's database, and the berth inventory may be saved on the port's reservation system.

Additional agents 230 that may use the system may be vendors pertaining to travel or marine cargo industry, that may offer their services via the MDS system. Examples of services at a destination location, that may be pre-booked by boaters, using the MDS system, include car rental, vessel maintenance services, and cargo delivery services. Insurance agents may offer their service in insuring cargo or travellers.

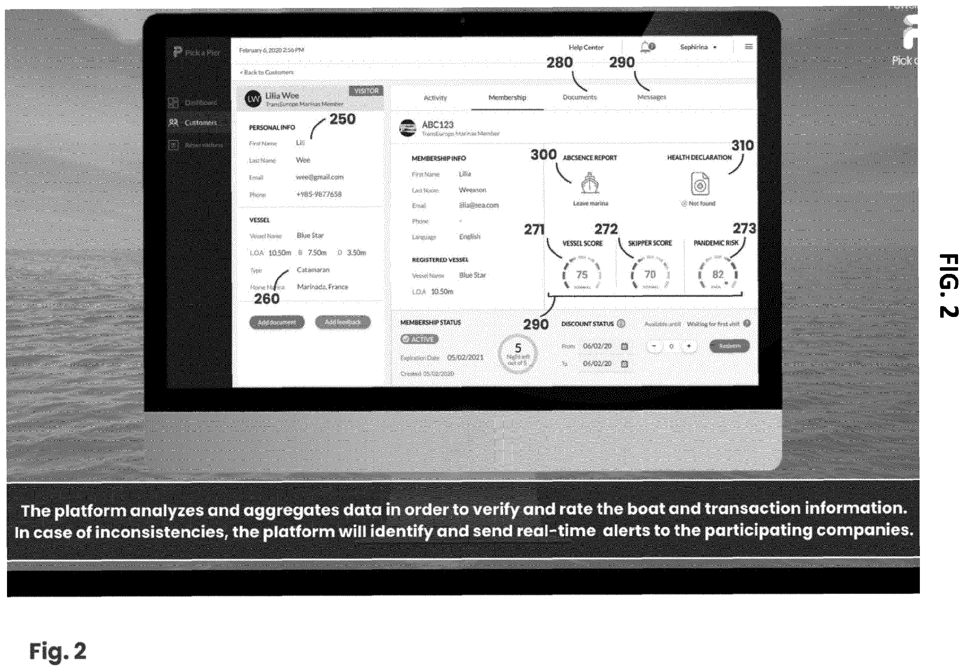

Referring now to Fig. 2, a central screen is shown for a specific boating user. The user information 250 is shown, as well as vessel information 260.

Ranking scores 270 are shown, that were generated by the ranking generator functionality of the MDS, for the specific vessel and skipper.

The MDS server collects data from port authorities, on past visits of a vessel at the port, in which port authorities indicate their satisfaction ranking for a specific vessel and specific skipper. If a visit was unpleasant due to breaking port rules, waste mismanagement, noise complaints or other reasons, port authorities may submit a poor ranking for a vessel or for a skipper. The ranking is associated with the user and is saved to the MDS database.

The port authorities receiving a new request for a berth reservation may check the vessel and skipper satisfaction ranking, and if it is deemed low, they may reject the reservation.

In Fig. 2, vessel score 271 is measured at 75%, and skipper score 272 is measured at 70%, therefore it is likely the requested reservation will be approved.

A vessel may be piloted by several skippers, and a skipper may pilot several vessels, therefore the ranking is both per vessel and per skipper.

When a reservation is requested, data is automatically collected on the vessel port of origin and recent countries visited. The MDS server utilizes latest relevant health rules put out by health authorities, to generate and output a health risk score 273. As shown in Fig. 2, pandemic risk score 273 for the specific vessel Blue Star was ranked at 82%, indicating a dangerous health risk, and docking permission will most probably be rejected by local port authorities or by the local health ministry.

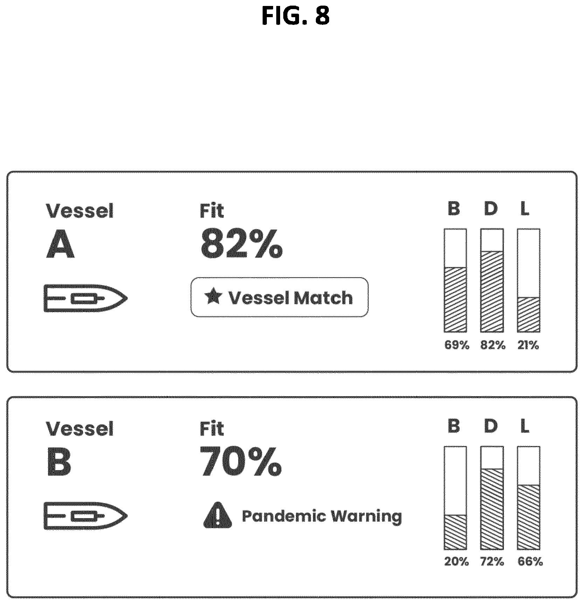

Referring to Fig. 8, the MDS provides an assessment of vessel parameters or Pandemic assessment, which aids port authorities in deciding whether to accept or decline possible reservations. Two vessels have sent a request for a reservation. The MDS system has rated Vessel A at 82% sized to fit a specific berth (vessel size measured by Beam, Draft Length Overall). Vessel B has been rated as 70% fit for this same berth, and the MDS has identified a Pandemic Warning for Vessel B, based on countries recently visited. Vessel A will be granted a reservation, while vessel B will be considered carefully and may be rejected, based on local health rules.

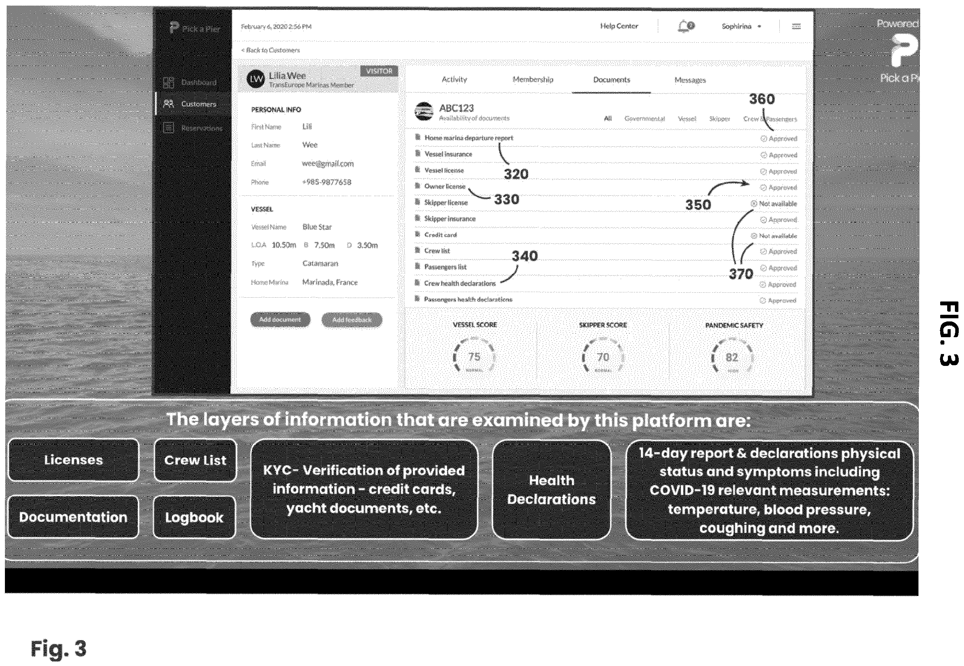

Referring back to Fig. 2, user may click on the Documents Tab 280 to upload any official documents necessary for marine travel. The documents may be saved as associated with the specific user profile, in a dedicated database linked to the MDS server, and may be automatically retrieved by the user or by the authorities, by the system on future reservation bookings. Additional details are described below in relation to Fig. 3.

User may click on the Messages Tab 290, to view any notifications he has received, such as approval of a reservation, request for additional documents, etc.

A boating user departing from his berth at port, may click on the Absence Report 300 button, to report his berth as being empty and available for leasing, thus increasing berth supply in busy ports. As an incentive, departing vessel users, may be paid a percentage of the profit or offered a discount while anchoring in another participating port.

A user may click on the Heath Declaration 310 button, to submit health related documentation, or to review the processing status of health documents.

Referring to Fig. 3, a screenshot is shown indicating all documents filed, and their processing status, as related to a specific voyage of the vessel Blue Star. Among the documents approved by port authorities or relevant government authorities, include the home marina departure report 320, the owner license 330, and the passenger list 340. Approval status 350 is shown at right, and indicates most documents have been approved 360, other than the skipper license and credit card data, which are Not Available 370 and thus still need to be submitted by the skipper or his representative.

The screen shown in Fig. 3 may be accessed by users such as government authorities, to update the processing status and add their comments on documentation needed. Boaters or their clerical assistants, may view the screen and submit documents, as needed.

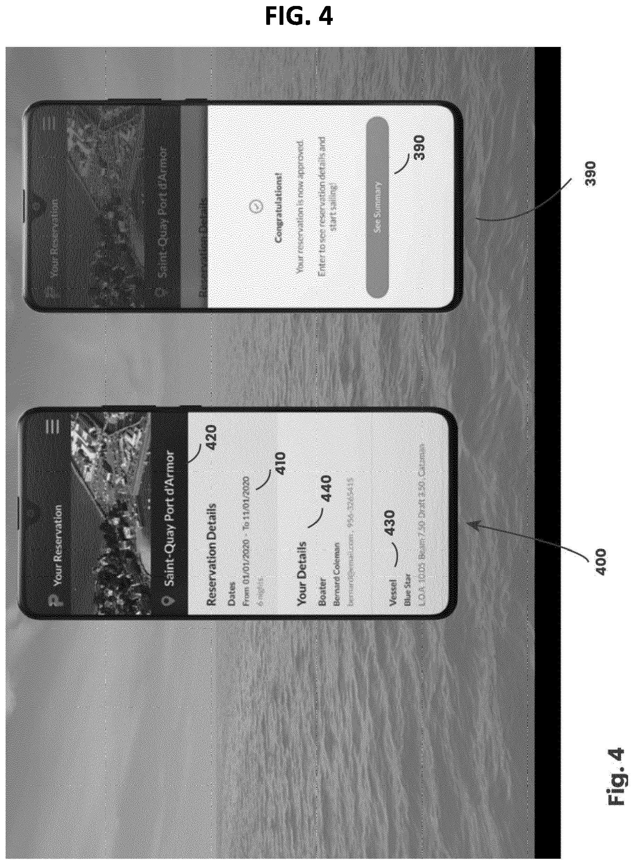

Referring to Fig. 4, screenshots are shown for a boater receiving approval of his berth docking reservation. An initial notification of "reservation approved" 380 is sent, and if the user clicks on the See Summary 390 button, a detailed Reservation Details 400 screen will appear, indicating the dates booked 410, port details 420, vessel name 430, and boater name 440.

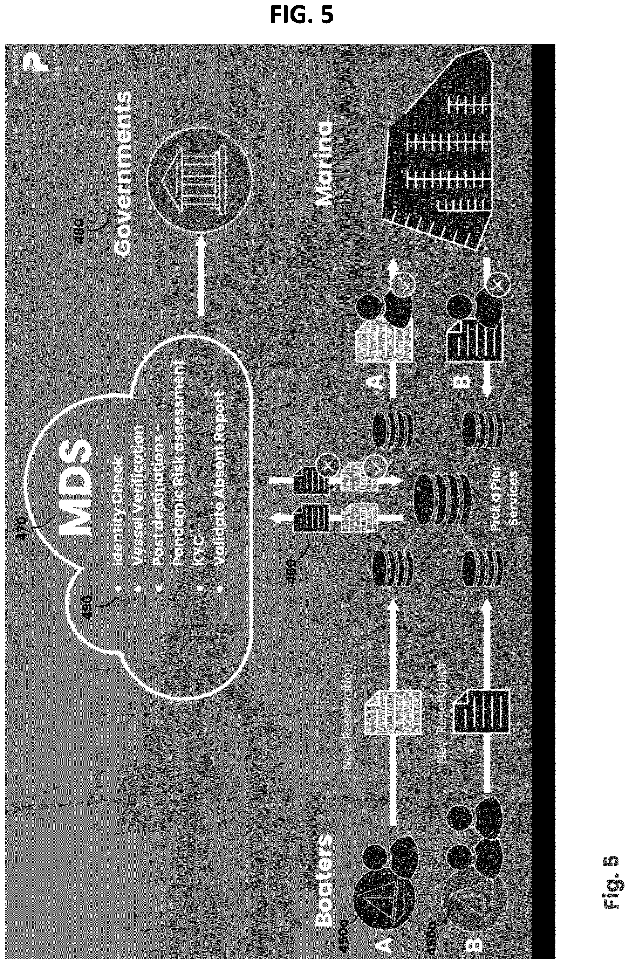

Referring to Fig. 5, various documents 460 are uploaded into the MDS system 470, by boaters 450a, 450b interested in reserving a berth at a destination port. Documents are reviewed by government officials 480, who may be given permissions to enter automatic rejection rules and policies. For instance, when health reasons forbid acceptance of fresh produce cargo from a specific port of origin, access may be given to government officials to set the MDS system to automatically "reject cargo including fresh produce from country X".

Similarly, the list of travellers included in a crew list or passenger list, may be automatically checked against an Interpol database of wanted criminals, according to requirements in a given country. Any people flagged as undesirables may be rejected, and a notice may be sent to the boater prior to departure or arrival.

Additionally, an identity check 490 of the boater or his documentation, may be required by specific port authorities, that may track suspicious marine travel. Specific past destinations may be flagged as related to drug traffic and may require customs check upon arrival.

Port authorities or marina chains may flag specific vessels or skippers as being undesirable, based on past experiences in their port. When these vessels or skippers request a new reservation, a notification will appear next to their name, and port authorities can decide whether to approve or reject the new reservation based on their policies. For instance, specific vessels may have been shown to have travelled with false documents in past or may have disregarded local law in past visits. Such behaviour may cause their name to be flagged for rejection in future. Documents uploaded to the MDS may be easily verified for authenticity and compared to previously filed documents. Payment activity deemed suspicious may be identified and flagged by the system.

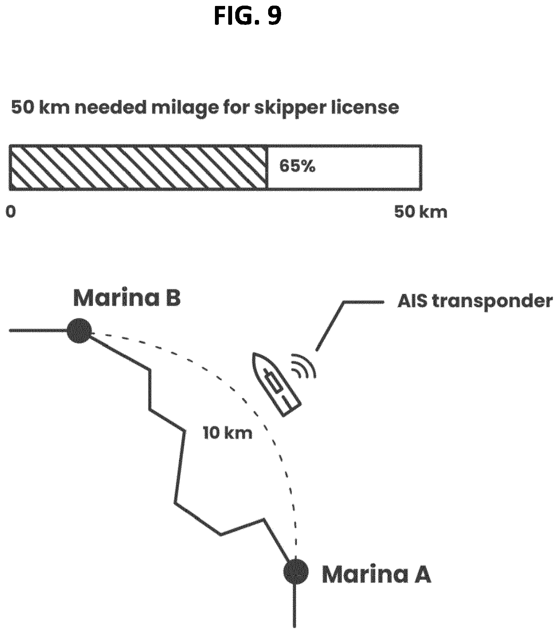

Referring to Fig. 9, among the advantages of the invention, is the capability to track the number of miles sailed by a specific boater. To obtain an international boating license, a skipper must submit documents showing he has sailed a specific distance, which signifies his seniority and capability. A user may log onto the MDS and identify himself, prior to departure, and the MDS will track the number of miles sailed by the user. In Fig. 9, user has logged onto the MDS and asked that the MDS track the signal from an automatic identification system transceiver located on the vessel. MDs system will then update the travel data for the skipper, to include 10 km of travel from Marina A to Marina B. MDS will then tally the remaining miles needed for this skipper to receive his skipper's license, which is 50 km in this instance. This data may be provided to the user for viewing on his electronic display.

Among the numerous advantages of the invention, the system aggregates data on vessel movement, from user updates on their travel, and can generate numerical reports to allow ports or other relevant authorities to detect marine travel trends. This can guarantee allocation of sufficient resources during peak travel times. For instance, the MDS may assess that significant marine traffic typically increases at a specific port during the summer, and the relevant port may note to increase waste pickup or ensure availability of utilities for vessel hook-up.

In a presently preferred embodiment, the travel data is automatically obtained by the system when users preform electronic check-in or check out from a port; which triggers saving of travel data in a the MDS database. Travel data typically includes calendar dates, vessel specifics, skipper specifics, port specifics, and arrival or exit from port. Additional travel data may be automatically saved as well, such as utilities consumed at port.

In one example, the data may be aggregated from vessels filing "Absence Reports", to provide local governments and border control with advance insight on departures and expected arrivals, so that they may provide sufficient staffing, to meet the marine traffic trends noted.

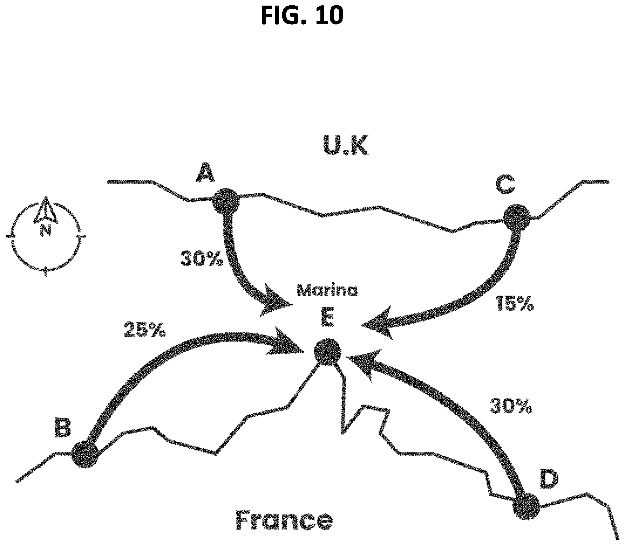

Referring to Fig. 10, travel data has been aggregated from participating vessels travelling in the vicinity of France and the UK. Users have reported their travel data, which was saved in the MDS database, as associated with the relevant vessels and skippers. The travel data was then analyzed using the travel trend analyzer of the invention. Travel trends have been identified for a certain time period, such as the month of May, and a report has been outputted showing that 30% of vessels travelled from UK Port A to Port E, while 15% of vessels travelled from UK Port C to Port E. Further, 30% of vessels travelled from Port D in France to Port E, and 25% of vessels travelled from French Port B to Port E. To determine whether this is a yearly trend, a report may be generated using the travel trend analyzer, showing for instance, travel data saved during the month of May for the past three years. The report may be plotted and displayed in graphical form or in any other format (such as Table format, etc.).

Marine travel data is automatically saved in an MDS associated database, for a user and his vessel, when the user sends the MDS a request to update his marine travel data. Examples of travel data saved are: the number of miles sailed; the port of origin; the destination port; calendar dates of travel; the travel route; an absence report from a port of origin, skipper data, passenger data, and vessel data.

Examples of reports that can be generated by the travel trend analyzer, using this data: vessels at port during predefined dates; vessels located at a defined geographical location during predefined calendar dates; water consumption at port for a vessel; electricity consumption at port for a vessel; waste pickup at port for a vessel; electricity consumption at a port during predefined calendar dates; water consumption at port during predefined calendar dates; waste pickup at port during predefined calendar dates; and travel trends at a predefined geographical location.

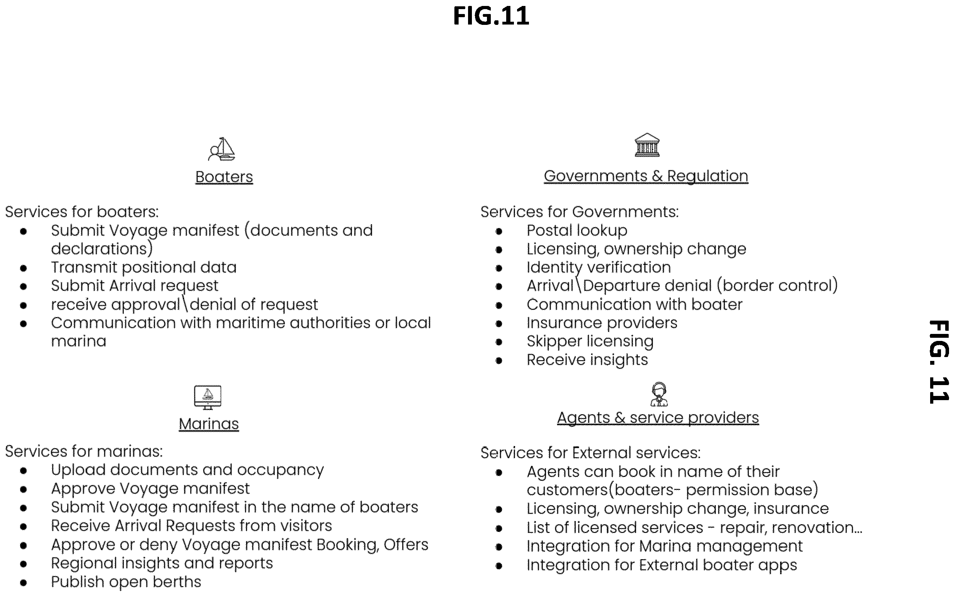

Referring to Fig. 11, the MDS provides marine travel numerous service capabilities, for boaters, government authorities, marinas, agents and service providers. The MDS enables direct updates and transparency between these parties, and offers electronic services not previously known in marine travel.

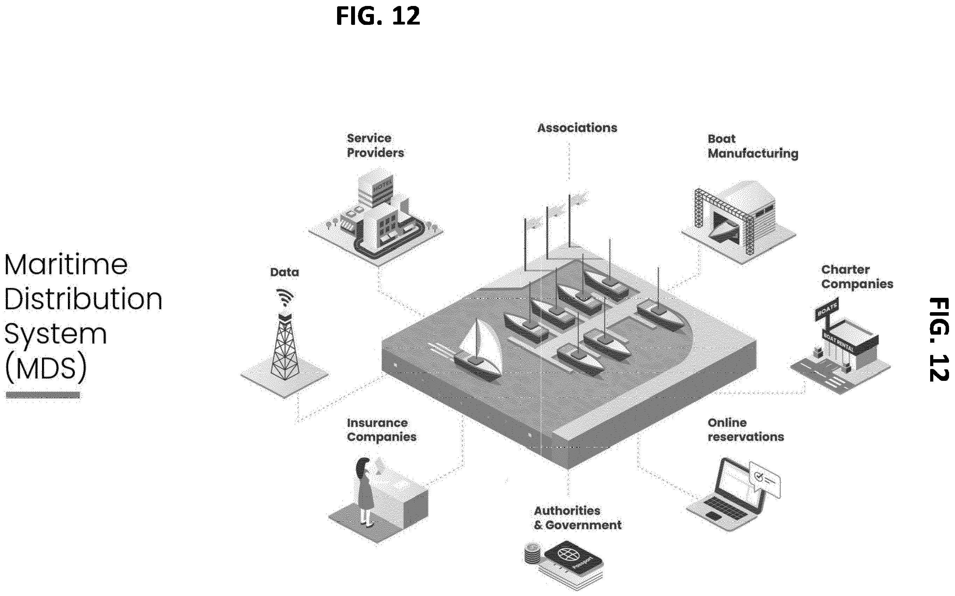

Referring to Fig. 12, numerous parties active in travel service, may benefit from the analysis of travel trends and reports, outputted by the MDS. Travel data has been aggregated from user reports, saved in the MDS database, and personalized reports may be sent to boat manufacturers, charter companies, reservation booking companies, authorities, boating associations, etc. Each of these parties may select the data he would like to peruse, including for instance, patterns at a geographic location, number of boats in port during a time period, country of origin for visiting users, etc.

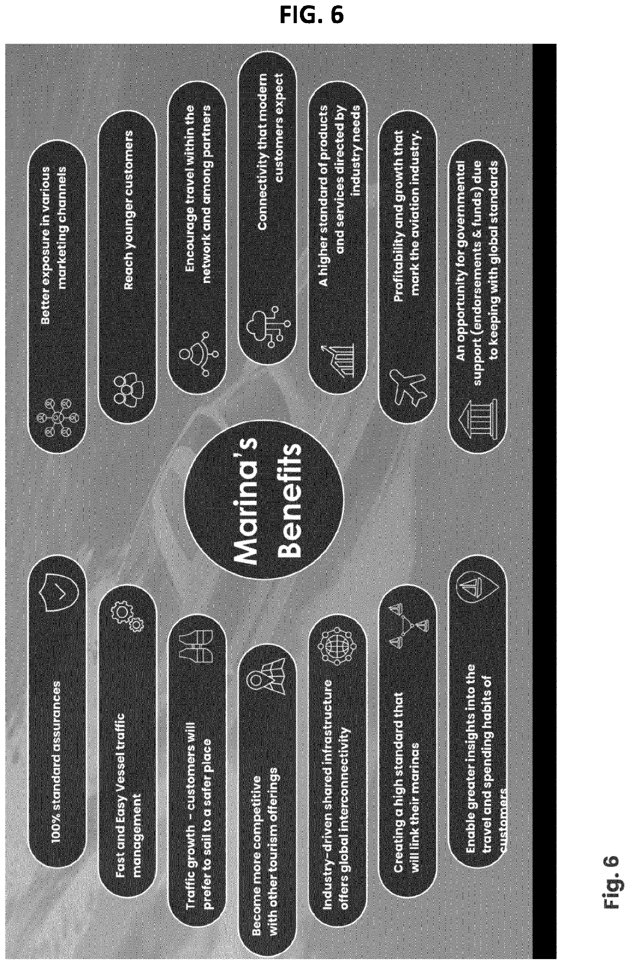

Referring to Fig. 6, advantages of the MDS system include Fast and Easy traffic management, the attraction of electronic communication for younger customers, and industry-driven shared infrastructure that offers global connectivity.

Users may be quickly informed of changes related to their geographical location, such as storm warnings or relevant bulletins related to local news or regulations. The MDS utilizes input from many outside data sources such as weather and marine market trends, analyses this data and provides a user with travel updates relevant to a user. For instance, a weather forecast may be provided so boaters can plan their route, and weather real-time information may be aggregated by the system.

Marina reviews may be provided to users to aid in selecting their destination. Users may be informed of maritime events, allowing users to watch or participate in sailing competitions.

The system informs users of documentation necessary for arrival at each location, as the documents may differ according to local regulations. Boaters and ports are able to readily show or check compliance with local regulations. The system enables real-time status updates and communication between marinas and boats and provides secured document transfer. There are innumerable vessels and skippers at a given time, and there may complex relations between boat ownership and boat users. The MDS software tracks these relationships and allows ports and authorities insight for policy making related to marine travel. The MDS system is tailored to global maritime needs and allows verified electronic tracking and processing of reservations.

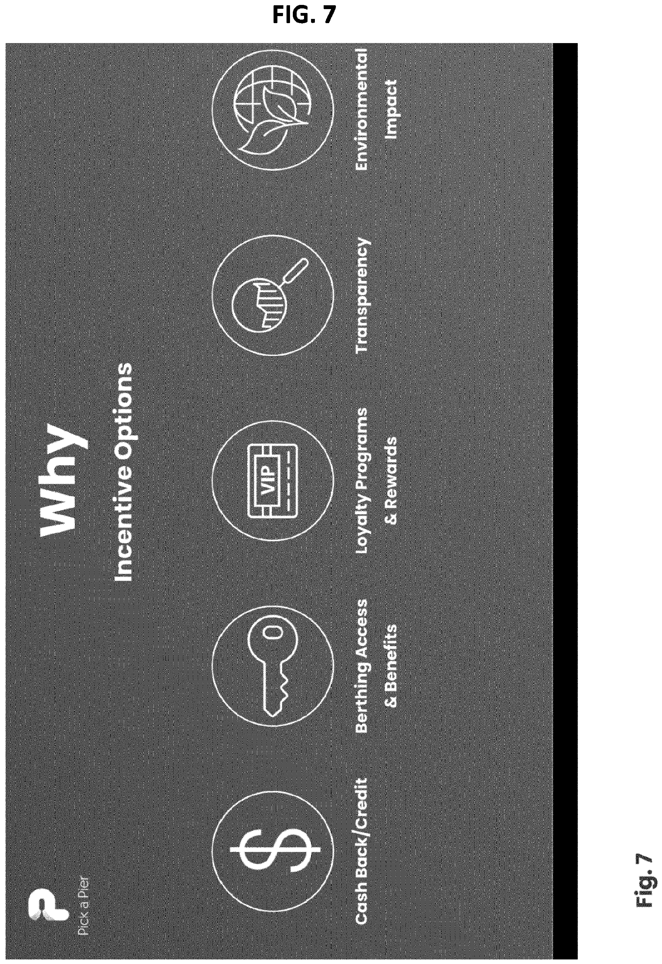

Referring to Fig. 7, boaters and ports may be offered incentive options to encourage use of the MDS system, such as cashback or upgrade of berths.

The system provides the marine industry with transparency, as users may see the status of processing of their reservation and may check the minute details of the berths of interest to determine suitability to their needs. Ports gain from transparency, as they may review future bookings on the system, and can precisely detect berth availability, well in advance of arrival of vessels.

The MDS system has a positive impact on the environment, as transparency of booking prevents excess building of unnecessary ports. Vessels or ports rated with negative environmental ranking, may be penalized, or notified.

The present invention provides a computerized system for executing the method of the invention. The computerized system includes a processing unit, a storage unit, an input interface, and an output interface. In this embodiment, these components are part of a personal computer, and they form a computing module. The components instead may be part of a workstation, PDA, or smart phone as non-limiting alternative example embodiments.

The input interface of the computerized system is configured to receive as input at least:
a request for a marine docking berth reservation at a port of interest, the reservation including reservation specifics.

The input interface of the computerized system is also configured to receive as input at least: a request to update marine travel data for an identified user or for an identified marine vessel.

The input interface may for example include a USB socket of the personal computer. The input interface may alternatively receive input from an entry device, such as a keyboard, and/or adjacent computer systems. The computerized system includes an input module that is configured to transmit to the input interface a user's input.

The software is layered, allowing its integration with existing user software applications. Users that already utilize existing applications for tracking and booking marine reservations, or billing and accounting software, may nevertheless utilize vital components of the invention.

The software is preferably run on "cloud-based" protected servers which allow authorized users to access it from any location having communications capability. This is useful in the travel industry, as users may be situated at a multitude of locations. A manager may wish to track progress at any of these locations and may have access to the availability of berths further down the travel route of a vessel. The software may be provided to authorized users, as a software as a service (SaaS).

Users may access and utilize the software of the invention via a user interface, using a web browser, or using a dedicated software application configured for a user smart cell phone, tablet or PDA, or personal computer. User may interact with the system of the invention using the respective input and display peripherals, pertaining to their tablet, smartphone, laptop or PC.

The processing unit is operatively connected to the input interface, the output interface, and the storage unit. The processing unit executes instructions contained in the storage unit. The instructions, when executed, cause the processing unit to: identify a user, and provide a user access to availability data of marine docking berths at the port of interest; provide a user with a list of documents required for docking at the port of interest; receive from the user documents required for docking; and receive from the user a berth booking request; save in memory, the documents required for docking; wherein the documents are associated with the identified user and with the berth booking request; provide access to the documents, to authorities associated with the port of interest; receive a processing status of the documents from the authorities; receive from the authorities, a status of processing of the berth booking request; and allow a user to view the processing status of the documents, and of the berth booking request.

Further, the instructions, when executed, cause the processing unit to identify a user, and save in memory, updated travel data, associated with the identified user and with the marine vessel; provide access to the marine travel data, to authorities associated with an area of travel of the vessel; and allow a user to view the travel data.

As non-limiting examples, the processing unit of system may include an Intel Processor Core i7, an Intel Model 1165G7 CPU, or any other equivalent means for processing (executing) instructions contained in the storage unit. Also, as non-limiting examples, the storage unit may be SATA hard drive, a flash memory SSD, or any other equivalent means for storing instructions that when executed by the processing unit cause the processing unit to function as described above.

The embodiment may be modified to allow a user to interact with a computing module through a network. As non-limiting examples, the network may be a local area network (LAN) within an office environment or alternatively the Internet. An alternative embodiment may implement a "hosted" architecture for the computing module, whereby the algorithmic calculations are done in a remote data- centre (server farm) accessible over the network/Internet. Another alternative embodiment may implement a cloud computing configuration for the computing module. Thus, a user may interact with the computing module using a Microsoft® Windows-based utility or a web browser, as non-limiting examples.

Having described the invention regarding certain specific embodiments thereof, it is to be understood that the description is not meant as a limitation, as further modifications will now become apparent to those skilled in the art, and it is intended to cover such modifications as are within the scope of the appended claims.

## Claims

1. A computerized method of ordering, tracking, and processing orders of marine docking berths at ports, said method comprising:
electronically identifying a user;
receiving as input, an electronic request for a marine docking berth reservation at a port of interest, said reservation request including reservation specifics;
providing a user access to availability data of marine docking berths at said port of interest;
outputting to a user a list of documents required for docking at said port of interest;
receiving from said user, documents required for docking, said documents received in electronic format; and receiving from said user a berth booking request;
saving in memory, said documents required for docking; wherein said documents are associated with said identified user and with said berth booking request;
providing access to said documents, and to said booking request, to authorities associated with said port of interest;
receiving a processing status of said documents from said authorities;
receiving from said authorities, a status of processing of said berth booking request;
allowing a user to view the processing status of said documents, and of said berth booking request.

2. The method of claim 1, wherein said reservation specifics pertaining to a reservation request, comprise: a vessel name, a vessel size, calendar dates of interest, and a port of interest.

3. The method of any of the preceding claims, wherein said authorities associated with said port of interest, comprise at least one of the following: port authorities, custom authorities, passport control authorities, tourism authorities, health ministry authorities, and police.

4. The method of any of the preceding claims, further comprising the step of sending a port authority, a query to rank their satisfaction level pertaining to a vessel and skipper, at the conclusion of the user's docking reservation; and saving said ranking in memory in association with said user identification.

5. The method of any of the preceding claims, comprising the step of automatically generating a health risk score associated with a reservation request, said score based on health rules created by health authorities at a geographical destination area interest; and providing said health risk score to authorities associated with said port of interest.

6. The method of any of the preceding claims, wherein said documents required for docking, and received from a user, are saved in memory, as associated with a user identity, and may be automatically retrieved repeatedly.

7. The method of any of the preceding claims, wherein said documents required for docking are selected from at least one of the following: a home marina departure document, vessel insurance, vessel license, owner license, skipper license, skipper insurance, credit card, crew list, passenger list, crew health declarations, passenger health declarations, manifest, and a cargo list.

8. The method of any of the preceding claims, further comprising the step of providing authorities associated with said port of interest, with permission to enter automatic rejection rules for a berth booking request and for said documents.

9. The method of any of the preceding claims, comprising the step of receiving a request from an identified user to track the distance sailed, obtaining data on the distance sailed and saving the data associated with said user.

10. A computerized system for ordering, tracking, and processing orders of marine docking berths at ports; said system comprising: an input interface for receiving input from a user;
a processing unit operatively connected to the input interface;
a storage unit operatively connected to the processing unit to store the input; the storage unit also containing instructions that when executed by the processing unit cause the processing unit to:
identify a user;
receive as input, a request for a marine docking berth reservation at a port of interest,
said reservation including reservation specifics;
provide a user access to availability data of marine docking berths at said port of interest;
provide a user with a list of documents required for docking at said port of interest;
receive from said user documents required for docking; and receive from said user a berth booking request;
save in memory, said documents required for docking; wherein said documents are associated with said identified user and with said berth booking request;
provide access to said documents, to authorities associated with said port of interest;
receive a processing status of said documents from said authorities;
receive from said authorities, a status of processing of said berth booking request;
allow a user to view the processing status of said documents, and of said berth booking request.

11. A computerized system for tracking travel data related to marine travel of participating vessels; said system comprising: an input interface for receiving input from a user;
a processing unit operatively connected to the input interface;
a storage unit operatively connected to the processing unit to store the input; the storage unit also containing instructions that when executed by the processing unit cause the processing unit to:
identify a user associated with a specific marine vessel;
receive as input, a request to update marine travel data for said user or for said marine vessel;
save in memory, said updated travel data, associated with said identified user and
with said marine vessel;
provide access to said marine travel data, to authorities associated with an area of travel of said vessel;
allow a user to view said travel data.

12. The system of claim 11, wherein said marine travel data is saved in memory in response to a user performing electronic check-in or checkout from a port.

13. The system of claim 11 or 12, wherein said marine travel data comprises at least one of the following: the distance sailed; the port of origin; the destination port; calendar dates of travel; the travel route; an absence report from a port of origin, skipper data, passenger data, and vessel data.

14. The system of any of claims 11 to 13, wherein said updated travel data is saved in a database as associated with said vessel and with said user, retrievable as a historical record of travel of said vessel or said user; said historical record comprising calendar dates of travel, and travel route.

15. The system of any of claims 11 to 14, wherein said updated travel data is aggregated and outputted as a report selected from at least one of the following: vessels at port during predefined dates; vessels located at a defined geographical location during predefined calendar dates; water consumption at port for a vessel; electricity consumption at port for a vessel; waste pickup at port for a vessel; electricity consumption at a port during predefined calendar dates; water consumption at port during predefined calendar dates; waste pickup at port during predefined calendar dates; travel route during predetermined dates for a vessel; and travel trends at a predefined geographical location during a predefined period.
